# EUROPEAN PATENT SPECIFICATION

(11) **EP 2 453 627 B1**
(45) Date of publication and mention of the grant of the patent: **28.03.2018**
(21) Application number: 10191023.0
(22) Date of filing: 12.11.2010
(51) Int. Cl.: H04L 29/06

(54) **Packet switched eCall connection**
Paketvermittelte eCall-Verbindung
Connexion d'appel électronique à commutation par paquets

(43) Date of publication of application: 16.05.2012
(73) Proprietor: Vodafone GmbH, 40549 Düsseldorf (DE)
(72) Inventor: Dietz, Ulrich, 81669, Munich (DE)
(74) Representative: Müller & Schubert

(56) References cited:
- EP-A2- 1 531 600
- WO-A1-01/45335
- WO-A1-2005/039227
- WO-A1-2010/020261
- WO-A1-2010/022652
- US-A1- 2002 097 708
- US-A1- 2010 202 368

## Description

The present invention relates to a server unit for processing information related to a first external terminal and related to a second external terminal according to the preamble of independent claim 1. Furthermore, the present invention relates to a communication system for processing information related to a first external terminal and related to a second external terminal according to the preamble of independent claim 7 and the present invention relates to a method of processing information related to a first external terminal and related to a second external terminal via a server unit according to the preamble of the independent claim 8. In emergency situations several different solutions for transmitting emergency messages or emergency calls are known in general prior art.

In case of an emergency a user can for example use his user device and can call and communicate via a circuit switched connection line with a Public Safety Answering Point (PSAP) which could be for example the fire department.

It is also known in general prior art, that so called eCall devices, which can also be provided as or within a portable nomadic device (PND), are installed within a vehicle. Usually such an eCall device is active in case of an emergency situation only. In such a case the eCall device sends an emergency message to a control station. In this case the eCall device can communicate via a circuit switched connection with the Public Safety Answering Point. In addition, an analogue transmission of data, particularly a Minimum Set of Data (MSD), is transmitted in addition to the voice call. Another known solution is called Third Party Support (TPS). According to this International Standardisation Organisation (ISO) standard the portable nomadic device communicates with a service centre. The service centre then establishes a communication link - three party call - to the Public Safety Answering Point.

It is a disadvantage of such third party support connections that the connection between the portable nomadic device and the conversion server or the service centre is in general prior art performed via a circuit switched connection. Usual portable nomadic devices, like for example navigation devices may not be equipped with a module for performing circuit switched connections and may lack a Mobile Subscriber ISDN Number (MSISDN) and/or a telephone number. For usage of third party support, these portable nomadic devices have to be additionally equipped for performing circuit switched connection, which would result in higher costs for such portable nomadic devices.

It is the object of the present invention to avoid the disadvantages in prior art and particularly to provide a possibility by which a simple portable nomadic device like for example a navigation device can be used for sending eCalls to a server unit.

In accordance with the present invention, this object is solved by the server unit for processing information with the features according to the independent claim 1 and the communication system for processing information with the features according to the independent claim 7 and the method of processing information with the features according to the independent claim 8. Additional features and details of the present invention become apparent from the dependent claims, from the description and from the drawing. Features and details described in connection with the server unit for processing information according to the first aspect of the invention are, of course, also valid in connection with the communication system for processing information according to the second aspect of the invention and the method of processing information according to the third aspect of the invention and vice versa. Features and details described in connection with the communication system for processing information according to the second aspect of the invention are, of course, also valid in connection with the method of processing information according to the third aspect of the invention and vice versa.

Pursuant to a first aspect of the present invention the object is solved by a server unit for processing information related to a first external terminal and related to a second external terminal. Therefore the server unit comprises a first interface to set up a first communication link to the first external terminal and a second interface to set up a second communication link to the second external terminal. The second communication link is adapted to transfer information via a circuit switched communication. The server unit for processing information is characterised in that the first communication link is adapted to transfer information via a packet switched communication.

A server unit is a server unit, which can be for example a central processing unit or the like. For example, incoming and/or outgoing information is processed in the server unit in a specific way, which will be described later. The server unit is for example a conversion server, where information is particularly received first. Than the information can be processed, for example converted, and finally send again. The server unit can particularly be the main part of a system for processing information. The present invention is not limited to specific types of server units. The server unit can be for example a single device or a group of two or more joined devices. The server unit can be adapted for performing decentralized operation and cloud computing.

In the server unit the information is processed in a way, that for example the information is transformed from one type or standard or format into/to another type or standard or format. The server unit can also be necessary because the format of the information has to be transformed because the information is received in a first format via a first transmission standard or connection and has to be sent in a second format via a second transmissions standard or connection.

"Processing" can mean any kind of processing. The present invention is not limited to special types of processing procedures or actions. The information can be processed in a way, that the full content of the information is processed and/or transformed and/or converted. It is also possible that only the required information or special information is for example extracted from the information and in the following processed and/or transformed and/or converted.

Information can be any kind of information. Information can be data, signals or the like. The present invention is not limited to specific types of information. Information can particularly be an ordered sequence of symbols.

According to the present invention the server unit is related to a first and a second external terminal. These terminals are preferably external terminals which mean that the terminals are not located within the server unit. Instead, the external terminals are preferably located outside from the server unit. The external terminals can be located near by the server unit but preferably the external terminals are located within a distance to the server unit. The terminals are preferably not located in the near field area of the server unit. The external terminals are preferably not part of the server unit. Furthermore, the first and second external terminals are preferably not located together. Preferably there is a geographical distance between the first external terminal and/or the server unit and/or the second external terminal. In particular, the first external terminal is installed or can be installed within a vehicle and the second external terminal is fixed located in a house or the like.

A terminal can be a device which is capable of communicating. Examples of terminals are for example telephones, fax machines, mobile phones, personal digital assistants, navigation devices, an eCall device or the like. A terminal can also be a Public Safety Answering Point (PSAP). A Public Safety Answering Point is particularly a call centre responsible for answering calls to an emergency telephone number for police, fire fighting, and ambulance services. A terminal is particularly a terminal which can send and/or receive and/or retrieve information. The present invention is not limited to specific types of terminals.

The present invention is also not limited to two terminals. It is also possible that an external terminal consists of several external devices which are joined together to form one terminal. So the first external terminal can consist of several external devices and/or the second external terminal can also consist of several external devices. The number of external devices joined to one terminal is not important. It is also possible that terminals, so called sub-terminals which consist of several devices are joined together to one external terminal.

In particular, the processed information is eCall information. "eCall" is a pan European project which intends to bring rapid assistance to motorists involved in an accident or a collision anywhere in the European Union. The project intends a hardware black box installed particularly in vehicles. This black box comprises a communication module which is adapted to use vehicle sensor information, such as airbag deployment and impact sensor information and the like, as well as global positioning system (GPS) coordinates of the vehicle to local emergency agencies, to generate or populate or form the Minimum Set of Data and to wirelessly send an eCall to the next available Public Safety Answering Point (PSAP).

The server unit comprises a first interface and a second interface. An interface is particularly a point of interaction between two systems or work groups. An interface can also be the interconnection between two items of hardware. The present invention is not limited to specific kinds of interfaces. The two interfaces comprised by the server unit are particularly not the same interface or are used for the same action. The first interface is particularly used for a first interaction and/or communication between the server unit and the first external terminal. The second interface is particularly used for a second interaction and/or communication between the server unit and the second external terminal. So the two interfaces are preferably not identical. The first and the second interface can be different from each other. In particular the two interfaces are different because the server unit has to process the information received from an external terminal and after processing the information the information is sent to another, particularly the second external terminal.

A communication link between the server unit and an external terminal can be set up. A communication link can be any kind of communication like a connection or the like. The present invention is not limited to special types of communication link or connection. It is particularly necessary that a transfer of data or information between the server unit and at least one terminal is possible. To ensure this, the communication link can be performed in any possible way. Preferably the communication link or the connection is performed in a way, that the transfer between the server unit and at least one terminal is possible from the server unit to the at least one terminal and/or from the at least one terminal to the server unit.

The communication link is particularly set up in a way that information transfer from the server unit to at least one terminal and/or from at least one terminal to the server is possible. The communication link can be set up in a way, that the communication link is established by the server unit and/or by at least one terminal. The communication link which can particularly be a connection between the server unit and at least one terminal can for example be set up manually, for example upon request. It is also possible that the communication link is set up automatically.

A communication is a process whereby information is enclosed in a package and is channelled and imparted by a sender to a receiver via some medium. The receiver then can decode the message and can for example give the sender a feedback. All forms of communication require a sender, a message, and an intended recipient; however the receiver need not be present or aware of the sender's intent to communicate at the time of communication in order for the act of communication to occur.

The server unit is particularly used to transfer information which is received from an external terminal by the server unit after processing the information to another external terminal. This means that the information is transferred via or through a communication link or via or through a connection from for example the server unit to an external terminal. The present invention is not limited to specific types of transfer possibilities.

The information between the server unit and the second external terminal should be transferred via the appropriate technology used to send an eCall. This is today a circuit switched communication allowing the in-band MSD transport and may in the future be a different technology. Circuit switched (CS) is a well known term in telecommunication. Simplified said, a circuit switched communication means, that a direct communication between at least two participants is set up and/or is performed. The communication is particularly performed in a way that the communication is a circuit switched communication. The communication can also be, also mentioned above, a connection. So the information can also be transferred via a circuit switched connection. In the present invention a circuit switched communication is set up between the server unit and the second external terminal via a second communication link.

In contrast, a first communication link between the first external terminal and the server unit can be set up which is particularly adapted to transfer information via a packet switched communication. So the communication between the at least one first external terminal and the server unit is performed as a packet switched communication. Packet switched (PS) is also a well known term in telecommunications. Simplified, packet switched means that a communication between one or more participants of a telecommunication can send their information which is packed in packages through and/or via a packet switched communication.

According to one preferred embodiment of the present invention, the server unit is assigned to a communication network. In particular the server unit can preferably be assigned to a mobile radio communication network. A communication network can be any kind of network in which a communication is possible. A communication can particularly be a process whereby information is enclosed in a package and is channelled and imparted by a sender to a receiver via some medium. The receiver then can decode the message and can give the sender a feedback. Particularly, all forms of communication require a sender, a message, and an intended recipient; however the receiver need not be present or aware of the sender's intent to communicate at the time of communication in order for the act of communication to occur.

"Assigned" in relation to the present invention is understood in a way, that the communication takes place in the communication network and/or that the server unit is linked with and/or located in the communication network.

A "mobile radio communication network" is particularly a network for radio mobile communication and/or cellular phone network, like it is well known in daily life. In a mobile radio communication network, mobile radio communication is possible.

According to another preferred embodiment of the present invention, the first interface is adapted to receive and/or send information from/to the first external terminal and the second interface is adapted to send and/or receive information to/from the second external terminal.

The first interface of the server unit is adapted to receive information from the first external terminal and for example after processing the information, the information is sent to the second external terminal using the second interface of the server unit. It is also possible that the second external terminal sends information via the second interface to the server unit and for example after processing the information, the information is send to the first external terminal via the first interface. So it is possible that information is exchanged between the first external terminal and the second external terminal through the server unit where the information is processed. The information exchange can be performed in both directions.

But it is also possible that the information is only exchanged between one external terminal and the server unit. Also possible is a combination of information sending and/or receiving and/or transferring. For example it could be possible that information is sent from the first external terminal to the server unit using the first interface. After processing the information, the information is sent from the server unit to the second external terminal using the second interface. After receiving the information, the second external interface could inform the server unit about the receiving of the information, like a confirmation message or a feedback. In addition the server unit could particularly inform the first external terminal that the information was/is transferred to and/or received by the second external terminal. So the present invention is not limited to specific combinations of sending or receiving information. It is also possible that one participant of the communication retrieves and/or requests the information. The information can particularly be a message or the like as mentioned above.

If information is received from or sent from the server unit to the second external terminal, it is possible that the server unit selects one specific external terminal. This selection can be performed by circumstances which can be set before and which can be stored within the server unit. For example, the selection can be performed by the location information of the first external terminal, which is received by the server unit via the first communication link by the first external terminal - this information is normally available in the MSD. The selection of the second external terminal is described in more detail further below.

According to another preferred embodiment of the present invention, the first communication link is adapted to transfer information via a packet switched communication in form of a Push-to-Talk communication. In particular the first communication link is adapted to transfer information via a packet switched communication in form of a Push-to-Talk communication in form over Cellular (PoC) or Voice over Internet Protocol (VoIP).

Push-to-talk, which is also known as Press-to-Transmit, is particularly a method of conversing on half-duplex communication lines, including two-way radio, using a momentary button to switch from voice reception mode to transmit mode. A typical Push-to-Talk connection connects almost instantly.

Push-to-Talk over Cellular (PoC) is particularly a service option for a mobile radio communication network or a cellular phone network which permits subscribers to use their phone as a walkie-talkie (CB - Citizen Band) but with almost unlimited range. One significant advantage of Push-to-Talk over Cellular is, that it allows a single person to reach an active talk group with a single button press; users no longer need to make several calls to coordinate with a group. PoC is a packet switched (PS) service and does not need any circuit switched (CS) functionality.

Voice over Internet Protocol (Voice over IP, VoIP) is particularly a general term for a family of methodologies, communication protocols, and transmission technologies for delivery of voice communications and multimedia sessions over Internet Protocol (IP) networks, such as the Internet. Other terms frequently encountered and often used synonymously with VoIP are IP telephony, Internet telephony, voice over broadband (VoBB), broadband telephony, and broadband phone.

Another possibility to transfer information via a packet switched communication can particularly be in form of Voice over LTE (VoLTE) or Voice over LTE via Generic Access (VoLGA).

According to another preferred embodiment of the present invention, the server unit comprises means for determining the position of the first external terminal.

To comply with the regulations the Mobile Network Operator (MNO) has to provide a back-up cell ID position in case the device based position is inaccurate.

By these means the position of the first external terminal can be determined by the server unit. Particularly the determination of the position can be performed by every kind of information by which the position of the first external terminal can be determined. For example, the first external terminal can send information via the first communication link to the server unit. In the server unit the means for determining the position of the first external terminal can particularly analyse the information and determine the position of the first external terminal.

For determining the position of the first external terminal, the information transferred from the first external terminal to the server unit can be for example a global positioning system (GPS) signal or an identification of the cell (cell ID as the back-up) in which the first external terminal is located. The present invention is not limited to specific types of information. It is only important that means in the server unit can determine the position, particularly the actual position of the first external terminal. The present invention is also not limited to specific types of means for determining the position of the first external terminal. These means can for example determine the position by analysing the transferred information. The information for determining the position of the first external terminal can be requested and/or received and/or retrieved by the server unit. It is also possible that the first external terminal sends this information automatically to the server unit.

The means for determining the position of the first external terminal can particularly be located within the server unit. But it is also possible that these means are located outside the server unit and only a connection between these means and the server unit exists. This connection can be any kind of connection. For example the connection can be a connection via a cable or wire or wireless.

According to another preferred embodiment of the present invention, the server unit comprises means for processing information received and/or retrieved from the first and/or second external terminal. As already mentioned above, the server unit can receive and/or retrieve and/or request information from the first and/or the second external terminal. The present invention is not limited to specific types of receiving and/or retrieving information. The information is particularly transferred from the first and/or second external terminal to the server unit. It is also possible that the server unit sends information to the first and/or the second external terminal. The information transfer can also be performed upon request.

The transfer of information can be any kind of information. Particularly the information comprises information about the position of the first and/or the second external terminal. The present invention is also not limited to specific types of information. The information can be exchanged from the first and/or second external terminal to the server unit and vice versa.

The server unit comprises means for processing the transferred information. "Processing" in focus of the present invention can be every type of processing. From the transferred information the means can extract parts of the information. It is particularly possible that the information is completely or only partial transferred and/or converted from one communication standard or type into another communication standard and type. The present invention is not limited to specific types of processing. The information can be processed in every possible way. For example the information can particularly be analysed and/or sorted and/or split and/or the like. Particularly, the process of processing is a decomposition and recomposition process.

The means for processing information can particularly be located within the server unit. But it is also possible that the means for processing information is located outside the server unit and only a connection between these means and the server unit exists. This connection can be any kind of connection. For example the connection can be a connection via a cable or wire or wireless.

According to another preferred embodiment of the present invention, the means for processing information received and/or retrieved from the first external terminal are adapted to generate or populate or form a Minimum Set of Data (MSD) during an eCall procedure.

Additionally an eCall-Flag, which can be necessary to distinguish an emergency call from an eCall, can be set by the server unit or the second communication interface. In particular, the eCall-flag can be included into the Minimum Set of Data. This can transfer the proprietary operation into the standardized operation as it, for the PSAP shall look like a full standard conform eCall, even if the link into the car is proprietary. If full standard conformity can't be achieved, it is an eCall light or can service with reduced liability.

The processing of the received and/or the retrieved information is performed in a way, that the information is adapted to generate a Minimum Set of Data. This is preferably performed during an eCall procedure. For an eCall, the server unit particularly requires information about the location of an external terminal, which can be the first external terminal, which can particularly be an eCall device. An eCall device can be installed for example in a portable nomadic device which can be installed within a vehicle or the like.

A Minimum Set of Data (MSD) is a known term in radio telecommunications, especially a known term in the field of eCalls. A Minimum Set of Data particularly comprises data which are necessary for performing an eCall. For example a Minimum Set of Data comprises a vehicle identification number (VIN) of the vehicle in which the eCall device is provided and the location of the eCall device to ensure fast and quick help in an emergency case. A Minimum Set of Data can also comprise vehicle sensor information, such as airbag deployment and impact sensor information and the like. An "emergency case" can be any kind of emergency case. Particularly it could be an accident. An eCall in case of an emergency can be performed for example automatically. Furthermore the user is able to trigger a manual eCall. The present invention is not limited to any kind of performing an eCall. For example, an eCall can also be performed by a combination of automatically and manually performance of an eCall.

The Minimum Set of Data is generated during the eCall procedure, that means after an eCall is triggered. Generating the Minimum Set of Data can be performed in a way that an external terminal, particularly the first external terminal, which can be a portable nomadic device, sends abovementioned information, for example the VIN and the location of the eCall device, to the server unit. In the server unit this information is for example processed by particularly analysing the information. So, the Minimum Set of Data comprises at least the minimum information for performing an eCall procedure.

According to another preferred embodiment of the present invention, the means for processing information is particularly adapted to convert information transferred via packet switched communication into information to be transferred via circuit switched communication and/or the means for processing information is adapted to convert information transferred via circuit switched communication into information to be transferred via packet switched communication.

As already mentioned above the server unit particularly acts like a translation unit between the first and/or the second external terminal. In particular, the first external terminal can be proprietary attached to the server unit, whereas the server unit can serve the Public Safety Answering Point in a standard conform way on the second external terminal. The information for example transferred from the first external terminal to the server unit can be transferred via a packet switched communication. For transferring this information to for example the second external terminal, a conversion of the information from packet switched to particularly circuit switched, or other standard if understood by the communication partner, is necessary if the communication from the server unit to the second external terminal is a circuit switched communication. In such case the means convert the information in a way that the information can be transferred via the second communication link from the server unit to the second external terminal.

In the present invention, it is also possible that the conversion of the information is possible in a way that the information is transferred via the second communication link via a circuit switched communication link from the second external terminal to the server unit. There, the information is transformed to a packet switched communication that the information can be sent via the first communication link from the server unit to the first external terminal. This can allow implementing a call back functionality that can provide the PSAP to call the eCall device and/or the first external terminal. As most packet switched (PS) connected devices - or whatever technology it will be in the future - particularly provide no MSISDN (telephone number), the conversion server can provide such a number for a period of time and can implement the function that only a PSAP can terminate an active eCall - the user is particularly not able to terminate an ongoing eCall.

The present invention is not limited to a number of conversion of information or a specific direction of conversion of information. The conversion can be performed as often as necessary and in any direction as necessary. The conversion can particularly be performed from the circuit switched communication to the packet switched communication and/or from to the packet switched communication to the circuit switched communication.

The means for converting information can particularly be located within the server unit. But it is also possible that the means for concerting information are located outside the server unit and only a connection between these means and the server unit exists. This connection can be any kind of connection. For example the connection can be a connection via a cable or wire or wireless.

According to a second aspect of the invention, a communication system for processing information related to a first external terminal and related to a second external terminal is disclosed. The system comprises a server unit according to the abovementioned aspects of the server unit and at least one first external terminal. This first terminal comprises an interface to set up a first communication link to the server unit, and the first communication link is adapted to transfer information via a packet switched communication.

In particular, a communication system for processing eCall information is disclosed.

"Processing" in focus of the present invention can be every type of processing. From the transferred information the communication system or the like can extract parts of the information. It is particularly possible that the information is completely or only partial transferred from one communication standard or type into another communication standard and/or type. The present invention is not limited so specific types of processing. The information can be processed in every possible way. For example the information can particularly be analysed and/or sorted and/or split and/or the like.

Information can be any kind of information. Information can be data, signals or the like. The present invention is not limited to specific types of information. Information can particularly be an ordered sequence of symbols.

The first terminal is preferably an external terminal which means that the first terminal is not located in the server unit. Instead, the first external terminal is preferably located outside from the server unit. The first external terminal can be located near by the server unit but preferably the first external terminal is located within a distance to the server unit. The first external terminal is preferably not located in the near field area of the server unit. The first external terminal is preferably not part of the server unit.

A terminal can be a device which is capable of communicating over a line. Examples of terminals are for example telephones, fax machines, mobile phones, personal digital assistants, navigation devices, an eCall device or the like. A terminal can also be a Public Safety Answering Point (PSAP). A Public Safety Answering Point is particularly a call centre responsible for answering calls to an emergency telephone number for police, fire fighting, and ambulance services. A terminal is particularly a terminal which can send and/or receive and/or retrieve information. The present invention is not limited to specific types of terminals.

In particular, the processed information is eCall information. "eCall" is a pan European project which intends to bring rapid assistance to motorists involved in a collision anywhere in the European Union. The project intends a hardware black box installed in vehicles. This black box comprises a communication module which is adapted to wirelessly send an eCall as described above.

An interface is particularly a point of interaction between two systems or work groups. An interface can also be the interconnection between two items of hardware. The present invention is not limited to specific kinds of interfaces. The two interfaces comprised by the external terminals are preferably not the same interface or are used for the same action. The first interface is particularly used for a first interaction and/or communication between the server unit and the first external terminal. The second interface is particularly used for a second interaction and/or communication between the server unit and the second external terminal. So the two interfaces are preferably not identical. In fact two, the first and the second interfaces can be different from each other. In particular the two interfaces are different because the server unit has to process the information received from an external terminal and after processing the information the information is sent to another external terminal.

A communication link between the server unit and an external terminal can be set up. A communication link can be any kind of communication like a connection or the like.

The present invention is not limited to special types of communication links or connections. It is particularly necessary that a transfer of data or information between the server unit and at least one terminal is possible. To ensure this, the communication link can be performed in any possible way. Preferably the communication link or the connection is performed in a way, that the transfer between the server unit and at least one terminal is possible from the server unit to the at least one terminal and/or from the at least one terminal to the server unit.

The communication link is set up in a way, that information transfer from the server unit to at least one terminal and/or from at least one terminal to the server is possible. The communication link can be set up in a way, that the communication link is established by the server unit and/or by at least one terminal. The communication link which can particularly be a connection between the server unit and at least one terminal can for example be set up manually, for example upon request. It is also possible that the communication link is set up automatically.

A communication is a process whereby information is enclosed in a package and is channelled and imparted by a sender to a receiver via some medium. The receiver then particularly decodes the message and can for example give the sender a feedback. All forms of communication require a sender, a message, and an intended recipient; however the receiver need not be present or aware of the sender's intent to communicate at the time of communication in order for the act of communication to occur.

The server unit is used to transfer information which is received from an external terminal by the server unit after processing the information to another external terminal. This means that the information is transferred via or through a communication link or via or through a connection from for example the server unit to an external terminal. The present invention is not limited to specific types of transfer possibilities.

The communication system for processing information particularly comprises a first external terminal and a second external terminal and a server unit, in which a first communication link is set up between the server unit and the first external terminal via a first interface and in which a second communication link is set up between the server unit and the second external terminal via a second interface.

According to another preferred embodiment of the present invention, the communication system comprises at least one second external terminal. This at least one second terminal comprises an interface to set up a second communication link to the server unit. This second communication link is adapted to transfer information via a circuit switched communication.

The second terminal is preferably an external terminal which means that the second terminal is not located in the server unit. Instead, the second external terminal is preferably located outside from the server unit. The second external terminal can be located near by the server unit but preferably the second external terminal is located within a distance to the server unit. The second external terminal is preferably not located in the near field area of the server unit. The second external terminal is preferably not part of the server unit.

Furthermore, the first and second external terminals are preferably not located together. Preferably there is a geographical distance between the first external terminal and/or the server unit and/or the second external terminal.

The present invention is also not limited to two terminals. It is also possible that an external terminal consists of several external devices which are joined together to one terminal. So the first external terminal can consist of several external devices and/or the second external terminal can also consist of several external devices. The number of external devices joined to one terminal is not important. It is also possible that the more terminal, so called sub-terminals which consist of several devices are joined together to one external terminal.

According to another preferred embodiment of the present invention, the server unit is the endpoint of the communication link between the first external terminal and the server unit and that the server unit is the starting point of the communication link between the server unit and the second external terminal.

An "endpoint" in focus to the present invention is particularly understood in a way, that the information and/or data transferred between the first external terminal and the server unit is only transferred between the first external terminal and the server unit. The information or data transferred between the server unit and the first external terminal is particularly not forwarded to another component of the communication system, like the second external terminal. Before the information or data received and/or retrieved by the server unit can be forwarded to another component of the communication system, like for example the second external terminal, the information and/or data is particularly processed in a way as described above. Related to endpoint, the information or data is particularly only transferred between the first external terminal and the server unit via the first communication link.

A "starting point" in focus to the present invention is particularly understood in a way, that the information and/or data transferred between the server unit and the second external terminal is only transferred between the server unit and the second external terminal. The information or data transferred between the server unit and the second external terminal is particularly not forwarded to another component of the communication system, like the first external terminal. Before the information or data received and/or retrieved by the server unit can be forwarded to another component of the communication system, like for example the first external terminal, the information and/or data is particularly processed and/or converted in a way as described above. Related to the starting point, the information or data is particularly only transferred between the server unit and the second external terminal via the communication link.

Preferably, the role of the "endpoint" and the "starting point" can change. In such case the information and/or data is transferred in opposite direction, which means, that the information and/or data is transferred from the second external terminal as a starting point to the server unit. In such case the server unit is the endpoint for information and/or data transferred from the second external terminal. It is also possible, that information and/or data is transferred from the server unit, as a starting point, to the first external terminal, as an endpoint.

According to a third aspect of the invention, a method of processing information related to a first external terminal and related to a second external terminal via a server unit is disclosed. The server unit comprises a first interface to the first external terminal and a second interface to the second external terminal. The method is particularly performed within a communication system according to the abovementioned aspects. Within the method of processing information, a first communication link is set up between the first external terminal and the server unit, information is transferred over the first communication link via a packet switched communication. Furthermore a second communication link is set up between the server unit and the second external terminal, and information is transferred over the second communication link via a circuit switched communication.

In particular the method is used for processing eCall information.

"Processing" in focus of the present invention can be every type of processing. From the transferred information, the communication system or the like can extract parts of the information. It is particularly possible that the information is completely or only partial transferred from one communication standard or type into another communication standard and type. The present invention is not limited so specific types of processing. The information can be processed in every possible way. For example the information can particularly be analysed and/or sorted and/or split and/or the like.

Information can be any kind of information. Information can be data, signals or the like. The present invention is not limited to specific types of information. Information can particularly be an ordered sequence of symbols.

In particular, the processed information is eCall information. "eCall" is a pan European project which intends to bring rapid assistance to motorists involved in a collision anywhere in the European Union. The project intends a hardware black box installed in vehicles. This black box comprises a communication module which is adapted to wirelessly send vehicle sensor information, such as airbag deployment and impact sensor information and the like, as well as GPS coordinates of the vehicle to local emergency agencies, for example the Public Safety Answering Points.

A terminal can be a device which is capable of communicating over a line. Examples of terminals are for example telephones, fax machines, mobile phones, personal digital assistants, navigation devices, an eCall device or the like. A terminal can also be a Public Safety Answering Point (PSAP). A Public Safety Answering Point is particularly a call centre responsible for answering calls to an emergency telephone number for police, fire fighting, and ambulance services. A terminal is particularly a terminal which can send and/or receive and/or retrieve information. The present invention is not limited to specific types of terminals.

The present invention is also not limited to two terminals. It is also possible that an external terminal consists of several external devices which are joined together to one terminal. So the first external terminal can consist of several external devices and/or the second external terminal can also consist of several external devices. The number of external devices joined to one terminal is not important. It is also possible that the more terminal, so called sub-terminals which consist of several devices are joined together to one external terminal.

A server unit is a server unit, which can be for example a central processing unit or the like. For example, incoming and or outgoing information is processed in the server unit in a specific way, which will be described later. The server unit is for example a conversion server, where information is particularly received first. Than the information can be processed and finally send again. The server unit can particularly be the main part of a system for processing information. The present invention is not limited to specific types of server units.

In the server unit the information is processed in a way, that for example the information is transformed from one type or standard into another type or standard. The server unit can also be necessary because the format of the information has to be transformed because the information is received in a first format via a first transmission standard or connection and has to be sent in a second format via a second transmissions standard or connection. "Processing" can mean any kind of processing particularly including conversion and/or converting of signals and information. The present invention is not limited to special types of processing procedures or actions. The information can be processed in a way, that the full content of the information is processed and/or transformed. It is also possible the only required information or special information is for example extracted from the information and in the following processed and/or transformed.

According to the present invention the server unit is related to a first and a second external terminal. These terminals are preferably external terminal which means that the terminals are not located in the server unit. Instead, the external terminals are preferably located outside from the server unit. The external terminals can be located near by the server unit but preferably the external terminals are located within a distance to the server unit. The terminals are preferably not located in the near field area of the server unit. The external terminals are preferably not part of the server unit. Furthermore, the first and second external terminals are preferably not located together. Preferably there is a geographical distance between the first external terminal and/or the server unit and/or the second external terminal.

The server unit comprises a first interface and a second interface. An interface is particularly a point of interaction between two systems or work groups. An interface can also be the interconnection between two items of hardware. The present invention is not limited to specific kinds of interfaces. The two interfaces comprised by the server unit are particularly not the same interface or are used for the same action. The first interface is particularly used for a first interaction and/or communication between the server unit and the first external terminal. The second interface is particularly used for a second interaction and/or communication between the server unit and the second external terminal. So the two interfaces are preferably not identical. In fact two the first and the second interfaces can be different from each other. In particular the two interfaces are different because the server unit has to process the information received from an external terminal and after processing the information the information is sent to another external terminal.

A communication link between the server unit and an external terminal can be set up. A communication link can be any kind of communication like a connection or the like. The present invention is not limited to special types of communication link or connection. It is particularly necessary that a transfer of data or information between the server unit and at least one terminal is possible. To ensure this, the communication link can be performed in any possible way. Preferably the communication link or the connection is performed in a way, that the transfer between the server unit and an at least one terminal is possible from the server unit to the at least one terminal and/or from the at least one terminal to the server unit.

The communication link is set up in a way that information transfer from the server unit to at least one terminal and/or from at least one terminal to the server is possible. The communication link can be set up in a way, that the communication link is established by the server unit and/or by at least one terminal. The communication link which can particularly be a connection between the server unit and at least one terminal can for example be set up manually, for example upon request. It is also possible that the communication link is set up automatically.

A communication is a process whereby information is enclosed in a package and is channelled and imparted by a sender to a receiver via some medium. The receiver then decodes the message and gives the sender a feedback. All forms of communication require a sender, a message, and an intended recipient; however the receiver need not be present or aware of the sender's intent to communicate at the time of communication in order for the act of communication to occur.

The server unit is used to transfer information which is received from an external terminal by the server unit after processing the information to another external terminal. This means that the information is transferred via or through a communication link or via or through a connection from for example the server unit to an external terminal. The present invention is not limited to specific types of transfer possibilities.

The communication system for processing information particularly comprises a first external terminal and a second external terminal and a server unit, in which a first communication link is set up between the server unit and the first external terminal via a first interface and in which a second communication link is set up between the server unit and the second external terminal via a second interface as mentioned above.

The communication link is particularly set up in a way that information transfer from the server unit to at least one terminal and/or from at least one terminal to the server is possible. The communication link can be set up in a way, that the communication link is established by the server unit and/or by at least one terminal. The communication link which can particularly be a connection between the server unit and at least one terminal can for example be set up manually, for example upon request. It is also possible that the communication link is set up automatically.

A first communication link between the first external terminal and the server unit is set up which is adapted to transfer information via a packet switched communication. So the communication between the at least one first external terminal and the server unit is performed as a packet switched communication. Packet switched (PS) is also a well known term in telecommunications. Simplified, packet switched means that a communication between one or more participants of a telecommunication can send their information which is packed in packages through and/or via a packet switched communication.

The information between the server unit and the second external terminal should be transferred via a circuit switched communication. Circuit switched (CS) is a well known term in telecommunication. Simplified said, a circuit switched communication means, that a direct communication between at least two participants is set up. The communication is particularly performed in a way that the communication is a circuit switched communication. The communication can also be, also mentioned above, a connection. So the information can also be transferred via a circuit switched connection. In the present invention a circuit switched communication is set up between the server unit and the second external terminal via a second communication link.

If information is received from or sent from the server unit to the second external terminal, it is possible that the server unit select one specific external terminal. This selection can be performed by circumstances which can be set before and which can be stored within the server unit. For example, the selection can be performed by the location information of the first external terminal, which is received by the server unit via the first communication link by the first external terminal.

According to another preferred embodiment of the present invention, the information transferred over the first communication link is particularly transferred via a packet switched communication in form of a Push-to-Talk communication. Particularly the communication is transferred in form of a Push-to-Talk communication over Cellular (PoC) or Voice over Internet Protocol (VoIP).

Push-to-talk, which is also known as Press-to-Transmit, is particularly a method of conversing on half-duplex communication lines, including two-way radio, using a momentary button to switch from voice reception mode to transmit mode. A typical Push-to-Talk connection connects almost instantly.

Push-to-Talk over Cellular (PoC) is particularly a service option for a mobile radio communication network or a cellular phone network which permits subscribers to use their phone as a walkie-talkie with unlimited range. One significant advantage of Push-to-Talk over Cellular is, that it allows a single person to reach an active talk group with a single button press; users no longer need to make several calls to coordinate with a group.

Voice over Internet Protocol (Voice over IP, VoIP) is particularly a general term for a family of methodologies, communication protocols, and transmission technologies for delivery of voice communications and multimedia sessions over Internet Protocol (IP) networks, such as the Internet. Other terms frequently encountered and often used synonymously with VoIP are IP telephony, Internet telephony, voice over broadband (VoBB), broadband telephony, and broadband phone.

Another possibility to transfer information via a packet switched communication can particularly be in form of Voice over LTE (VoLTE) or Voice over LTE via Generic Access (VoLGA).

According to another preferred embodiment of the present invention, the position of the first external terminal can be determined within the server unit. The position of the first external terminal is particularly determined by a global positioning system (GPS) module and/or the identification of the cell (cell ID) or other MNO location mechanism. The present invention is not limited to specific types of determining the position of the first external position. The position of the first external terminal can be determined in any possible way.

The position determination by a global positioning system is well known in prior art. The global positioning system (GPS) is a space-based global navigation satellite system that provides reliable location and time information in all weather and at all times and anywhere on or near the Earth when and where there is an unobstructed line of sight to four or more GPS satellites.

The determination of the position particularly for advanced eCall handling (e.g. back up position in case of a failure or inconsistency of the data) of the first external terminal can be performed using the identity of a cell using a subscriber identity module (SIM). Using a subscriber identity module card (SIM-Card) for example in a mobile device like a mobile communication device or a navigation device and core network functionality the location of the subscriber identity module can be determined by the identity of the cell in which the subscriber identity module is located. The size of cells of a communication network varies and depends for example of the circumstances for example of buildings or the like. The determination of the cell location is also well known in prior art.

The SIM in connection with the core network can play a vital role if in case of an eCall an temporarily MSISDN shall be assigned and signalled to the PSAP.

According to another preferred embodiment of the present invention, information received and/or retrieved from the first and/or second external terminal is processed within the server unit. In particular a Minimum Set of Data (MSD) can be generated or formed or populated on the server unit during an eCall procedure composed by the necessary information pieces that had been receives or retrieved via packet switched communication and are converted into the MSD information that are then be transferred via circuit switched communication (preferably in-band to comply with the actual standards). The MSD and eCall voice part can also be transferred via other means depending on the evolution of standards and processes and shall not be restricted to circuit switched communication or packet switched communication.

The information received and/or retrieved from the first and/or the second external terminal is processed within the server unit. The information is particularly processed in a way as already mentioned above.

The processing of the received and/or the retrieved information within the server unit is performed in a way, that a Minimum Set of Data is composed if not delivered by the first external terminal. This is preferably performed during an eCall procedure. For an eCall the server unit required particularly information about the location of an external terminal, which can be the first external terminal, which can particularly be an eCall device. An eCall device can be installed for example in a portable nomadic device. The system is particularly able to interface with both systems, the standard european eCall and Third party supported (TPS), depending on the preferences. Additionally updates to cover new developments are possible.

A Minimum Set of Data (MSD) is a known term in radio telecommunications, especially a known term in the field of eCalls. A Minimum Set of Data comprises particularly data which are necessary for performing an eCall. For example, as described further above, a Minimum Set of Data comprises a VIN of the eCall device and the location of the eCall device to ensure fast and quick help in an emergency case. An "emergency case" can be any kind of emergency case. Particularly it could be an accident. An eCall in case of an emergency can be performed for example automatically. Furthermore the user is able to trigger a manual eCall. The present invention is not limited to any kind of performing an eCall. For example, an eCall can also be performed by a combination of automatically and manually performance of an eCall.

The Minimum Set of Data is generated or populated or formed during the eCall procedure, that means after an eCall is triggered. If the MSD is not delivered completely, the server unit can particularly compose it. Generating the Minimum Set of Data can be performed in a way that a external terminal, particularly the first external terminal, which can be an portable nomadic device sends information to the server unit. In the server unit this information is for example processed by particularly analysing the information concerning the VIN and the location of the external terminal. So, the Minimum Set of Data comprises at least the minimum information for performing an eCall procedure.

Particularly the information, which can comprise a Minimum Set of Data, is transferred from the first external terminal to server unit via the first communication link via a packet switched connection. Within the server unit the information is processed, particularly converted or transformed in a way, that the information, particularly the information which comprises a Minimum Set of Data is transferred from the server unit to the second external terminal via the second communication link via a circuit switched connection. The connection can also be a communication connection or the like.

According to the present invention a cheap and simple first external terminal, which can particularly be user device, like a portable nomadic device (PND) for example a navigational system, can be connected to a sever unit centre via a packet switched communication link.

The server unit, a conversion server or a service unit for example, which is part of the telecommunications network, can work together with a platform which ties the portable nomadic device to the network. Thus, it is possible to provide very simple portable nomadic devices with eCall functionalities.

Preferably, the server unit represents a demarcation line between proprietary and standard conform operation. It helps to connect a proprietary solution to a standard solution.

According to Third Party Support, the server unit is some kind of a switching device. According to the present invention the server unit forms an active part of the system. The server unit emulates the packet switched communication in such a way that it reaches the circuit switched as good as possible. The emulation can particularly be controlled by a Public Safety Answering Point.

With the present invention it is possible to equip simple portable nomadic devices, which are particularly located within a vehicle, with basic or even full eCall functions.

To allow the first external terminal to set up an eCall, like emergency call, the present invention foresees to use push-to-talk over cellular (PoC) or VoIP features to establish a packet switched voice call from the first external terminal into a communication network and to insert a server unit, like a conversion unit or server, that populates, amends or completes the Minimum Set of Data (MSD) and acts as the starting point for an eCall between a PSAP or a call centre if all requirements are fulfilled.

The server unit can particularly use the identity, the cell identity, network based or the exact global positioning system location, extracted from the Minimum Set of Data fragment transferred by the first external terminal, which can be a portable nomadic device, to determine the best second external terminal, particularly a suited Public Safety Answering Point. The direction of travel, which can be essential for a fully populated Minimum Set of Data, can be derived from the Minimum Set of Data fragment. The server unit can particularly select a suitable second external terminal point due to the received information from the first external terminal.

Other mechanisms are particularly not available as long as the first external terminal is not tracked before the eCall is set up.

The server unit, which can also be a decentralized server architecture, acts as a sole counterpart for the first external terminal. If such an equipped first external terminal sets up a packet switched eCall, the server unit acts as the endpoint that is always addressed. There is no other endpoint available to handle eCalls. This fact makes the system reliable.

The server unit collects all necessary information to inform the second external terminal about the eCall set up by the first external terminal. So the server unit acts as the starting point for an eCall towards the second external terminal. The server unit receives via the first external terminal all necessary information from the in-vehicle sensors, which can be available on the controller area network (CAN) or elsewhere in the vehicle's electronics and eCalls and transforms these eCalls into a standardised eCall.

So an automatic crash notification from a first external terminal can be used to set up an eCall directly. This eCall is particularly standard conform.

The user of the first external terminal may populate the vehicle identification number (VIN) and/or other Minimum Set of Data (MSD) information himself, for example by typing the information into the first external terminal, or by typing the information to the vehicles eCall generator function or the like. It is also possible that the vehicle is equipped with an additional interface, like Bluetooth or the like, to receive data containing this information like the vehicle identification number (VIN) and/or other Minimum Set of Data (MSD) information. In particular, it is possible that the server unit can do this independently from the user's settings.

According to the present invention it is possible that the second external terminal calls back the sever unit and/or the first external terminal. This can for example be performed by keeping the second communication link open or existing until the second external terminal terminates the eCall (as standardised) and/or by keeping the context open for a period of time. This time frame can be adjusted according the needs and may last for minimum of twenty-four hours. MSISDN can be assigned temporarily. This can be achieved by providing a temporarily MSISDN for a first external terminal, in form of a PS only device, at the server unit that then acts as a B-Party taking the call from the second external terminal, in form of a PSAP and tunnelling the call to the first external terminal.

The present invention relates to a server unit for processing information related to a first external terminal and related to a second external terminal, in particular for processing eCall information. The server unit comprises a first interface to set up a first communication link to the first external terminal and a second interface to set up a second communication link to the second external terminal. The second communication link is adapted to transfer information via a circuit switched communication and the first communication link is adapted to transfer information via a packet switched communication. Additionally the present invention relates to a communication system for processing information related to a first external terminal and related to a second external terminal and a server unit. Furthermore the present invention relates to a method of processing information related to a first external terminal and related to a second external terminal and a server unit.

US 2010/202368 A1 describes a method for providing a Minimum Set of Data, MSD in connection with emergency calls.

WO 2010/020261 A1 discloses handling of session continuity for emergency sessions when roaming between packet switched and circuit switched access.

WO 2010/022652 A1 is related to Single Radio Voice Call Continuity of emergency calls between PS and CS networks.

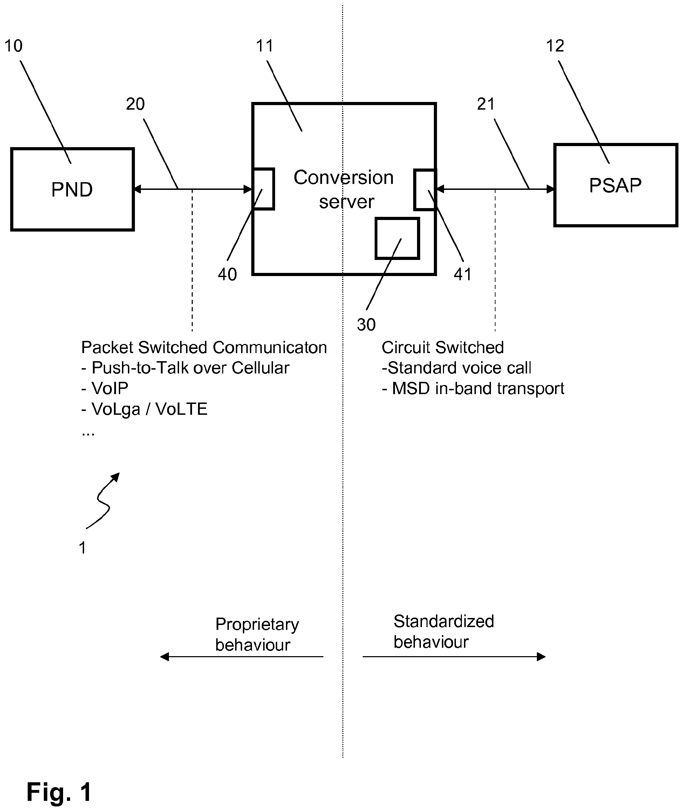

For a better understanding of the present invention, a preferred embodiment of the present invention will now be described by way of an example with reference to the description and the accompanying drawing, in which
Figure 1 is a schematic view of a communication system for processing information according to the present invention.

In Figure 1 a schematic view of a communication system for processing information 1 according to the present invention is shown.

The shown communication system for processing information 1 comprises a first external terminal 10, which can be for example a portable nomadic device (PND), a aftermarket device fitted for example into the vehicle in a garage, or any other portable device brought into and installed within a vehicle, a server unit 11, which can be a conversion server, and a second external terminal 12, which can be for example a Public Safety Answering Point (PSAP).

Between the first external terminal 10, installed for example within a vehicle and the server unit 11 a packet switched communication 20 which can be a push-to-talk over cellular communication can be established. Between the server unit 11 and the second external terminal 12 a standard conform circuit switched communication 21 which can be a voice call communication can be established.

The server unit 11, which can be for example a conversion server, can comprise means for processing and/or conversion and/or converting of information 30 and a first interface 40 to the first external terminal 10 as well as a second interface 41 to the second external interface 12.

The communication system for processing information 1 is used for processing eCall information.

In an emergency case, an eCall is performed and/or set up by the first external terminal 10, which is particularly a portable nomadic device like a navigation device or any other device. Between the first external terminal 10 and the server unit 11, which is particularly a conversion server, a packet switched communication 20 in form of a presumably push-to-talk over cellular communication is performed. An eCall is send from the first external terminal 10, which is not a part of the server unit 11, via the packet switched communication 20 to the server unit 11. For performing the eCall, the first external terminal 10 is connected via packet switched connectivity. The packet switched communication 20 is performed as a push-to-talk over cellular packet switched communication. The server unit 11 receives the information send from the first external terminal 10 by the first interface 40.

For processing an eCall the server unit 11 receives and/or retrieves particularly a Minimum Set of Data from the first external terminal 10 because for processing an eCall the position or location of the first external terminal 10 is required. Additionally, the VIN of the vehicle, in which the first external terminal 10 is provided, can also be send to the server unit 11. In the server unit 11, the transferred information, for example the eCall information is processed in a way, that the information is forwarded from the second interface 41 via a circuit switched communication 21 to a second external terminal 12. The second external terminal 12 can particularly be a Public Safety Answering Point like a fire department for example. The location of the first external terminal 10 and for example the VIN of the vehicle, in which the first external terminal 10 is provided, is transferred from the server unit 11 to the second external terminal 12. The second external terminal 12 is located separately from the server unit 11.

The processing and/or conversion and/or converting of the information are performed within the server unit 11, especially within the means for processing the information 30. There, the received and/or retrieved information is converted from a packet switched communication to a circuit switched communication.

The information from the first external terminal 10 is transferred to the server unit 11 via the packet switched communication 20. For receiving the information, the server unit 11 comprises a first interface 40. The server unit 11 comprises also a second interface 41 for transferring the information through the circuit switched communication 21 to the second external terminal 12.

After receiving the location of the first external terminal 10 and the VIN, the server unit 11 converts the information and forwards the information to the second external terminal 12, for example the PSAP. There, the required actions according to an eCall can be performed. For example, it is possible that an ambulance is sent to the location of the accident. If for example further information, like the value of the impact force, is transferred from the first external terminal 10 via the server unit 11 to the second external terminal 12, the second external terminal 12 can estimate what kind of help is required.

In addition the second external terminal 12, which can also be a fire department, can send a confirmation and/or an acknowledge message back to the server unit 11 and so back to the first external terminal 10 that the user of the first external terminal 10 is informed that the eCall is successfully performed and help is on the way. Additionally, a voice communication between the second external terminal 12 or the server unit 11 and first external terminal 10 is established and continued until the second external terminal 12 terminates the communication. This kind of feedback can be performed once and/or upon request by the server unit 11 or the first external terminal 10 or this kind of feedback can be performed automatically and/or continuously. Additionally the second external terminal 12 or the server unit 11 is able to call back at any time.

Besides, it is possible that the server unit 11 controls the eCall or the second external terminal 12 controls the eCall.

The server unit 11 can particularly use the identity, the cell identity, network based or the exact global positioning system location, extracted from the Minimum Set of Data fragment transferred by the first external terminal 10, which can be portable nomadic device, to determine the best suited second external terminal 12, for example a Public Safety Answering Point. The direction of travel, which can be essential for a fully populated Minimum Set of Data, can be derived from the Minimum Set of Data fragment. Other mechanisms are particularly not available as long as the first external terminal 10 is not tracked before the eCall is set up.

To allow the first external terminal 10 to set up an eCall like emergency call push-to-talk over cellular (PoC) or VoIP features are used to establish a packet switched voice call from the first external terminal 10 into the communication network and to insert a server unit 11, that populates, amends or completes the Minimum Set of Data (MSD) and acts as the starting point for an eCall if all requirements are fulfilled.

The server unit 11, which can also be a decentralized server architecture, acts as a sole counterpart for the first external terminal 10. If such an equipped first external terminal 10 sets up a packet switched eCall, the server unit 11 acts as the endpoint that is always addressed. There is no other endpoint available to handle eCalls. This fact makes the system reliable.

The server unit 11 collects all necessary information to inform the second external terminal 12 about the eCall set up by the first external terminal 10. So the server unit 11 acts as the starting point for an eCall towards the second external terminal 12. The server unit 10 receives a packet switched controller area network and eCalls and transforms these eCalls into a standardised eCall.

So an automatic crash notification from a first external terminal 10 can be used to set up an eCall directly.

The user of the first external terminal 10 may populate the vehicle identification number (VIN) and/or other Minimum Set of Data (MSD) information himself, for example by typing the information into the first external terminal, or by typing the information to the vehicles eCall generator function or the like. It is also possible that the vehicle is equipped with an additional interface, like Bluetooth or the like, to receive data containing this information like the vehicle identification number (VIN) and/or other Minimum Set of Data (MSD) information. In particular, it is possible that the server unit 11 can do this independently from the user's settings.

It is also possible that the second external terminal 12 calls back the sever unit 11 and/or the first external terminal 10. This can for example be performed by keeping the circuit switched communication 21 open until the second external terminal 12 terminates the eCall and/or by keeping the context open for a period of time. This time frame can be adjusted according the needs and may last for minimum of twenty-four hours. This can be achieved by providing a temporarily MSISDN for a first external terminal 10, in form of a PS only device, at the server unit 11 that then acts as a B-Party taking the call from the second external terminal 12, in form of a PSAP and tunnelling the call to the first external terminal 10.

### List of Reference Numerals

- 1: communication system for processing information
- 10: first external terminal (portable nomadic device)
- 11: server unit
- 12: second external terminal (Public Safety Answering Point)
- 20: packet switched communication (push-to-talk over cellular communication)
- 21: circuit switched communication (voice call communication)
- 30: means for processing information
- 40: first interface
- 41: second interface

## Claims

1. A server unit (11) for processing eCall information related to a first external terminal (10) and related to a second external terminal (12), said server unit (11) comprising a first interface (40) being used for a first communication between the server unit (11) and the first external terminal (10) to set up a first communication link to said first external terminal (10) and a second interface (41) being used for a second communication between the server unit (11) and the second external terminal (12) to set up a second communication link to said second external terminal (12), said second communication link being adapted to transfer information via a circuit switched communication (21), **characterised in that** said first communication link is adapted to transfer information via a packet switched communication (22), **in that** the server unit (11) comprises means for processing information received and/or retrieved from the first and/or second external terminal (10, 12), **in that** the means for processing information is adapted to convert information transferred via packet switched communication (20) into information to be transferred via circuit switched communication (21) and/or that the means for processing information is adapted to convert information transferred via circuit switched communication (21) into information to be transferred via packet switched communication (22), and that the server unit (1) is the endpoint of the first communication link between the first external terminal (10) and the server unit (11) and that the server unit (11) is the starting point of the second communication link between the server unit (11) and the second external terminal (12)

2. The server unit (11) according to claim 1, **characterised in that** said server unit (11) being assigned to a communication network, in particular to a mobile radio communication network.

3. The server unit (11) according to claim 1 or 2, **characterised in that** the first interface (40) is adapted to receive and/or send information from/to the first external terminal (10) and that the second interface (41) is adapted to send and/or receive information to/from the second external terminal (12).

4. The server unit (11) according to anyone of claims 1 to 3, **characterised in that** the first communication link is adapted to transfer information via a packet switched communication (20) in form of a Push-to-Talk communication, in particular in form of a Push-to-Talk communication over Cellular, PoC or Voice over Internet Protocol, VoIP or Voice over LTE, VoLTE or Voice over LTE via Generic Access, VoLGA.

5. The server unit (11) according to anyone of claims 1 to 4, **characterised in that** the server unit (11) comprises means for determining the position of the first external terminal.

6. The server unit (11) according to claim 1, **characterised in that** the means for processing information received and/or retrieved from the first external terminal (10) are adapted to generate or form or populate a Minimum Set of Data, MSD during an eCall procedure.

7. A communication system for processing eCall information (1) related to a first external terminal (10) and related to a second external terminal (12), said system comprising a server unit (11) according to anyone of claim 1 to 6, at least one first external terminal (11), said first external terminal (11) comprising an interface (40) to set up a first communication link to said server unit (11), said first communication link being adapted to transfer information via a packet switched communication (20), at least one second external terminal (12) said second external (12) terminal comprising an interface (41) to set up a second communication link to said server unit (11), said second communication link being adapted to transfer information via a circuit switched communication (21, wherein the server unit (1) is the endpoint of the first communication link between the first external terminal (10) and the server unit (11) and wherein the server unit (11) is the starting point of the second communication link between the server unit (11) and the second external terminal (12)..

8. A method of processing eCall information related to a first external terminal (10) and related to a second external terminal (12) via a server unit (11), said server unit (11) comprising a first interface (40) to said first external terminal (10) and a second interface (41) to said second external terminal (12), said method being performed within a communication system according to claim 7, **characterised in that** a first communication link is set up between said first external terminal (10) and the server unit (11), that information is transferred over the first communication link via a packet switched communication (20), that a second communication link is set up between the server unit (11) and the second external terminal (12), that information is transferred over the second communication link via a circuit switched communication (21), that information received and/or retrieved from the first and/or second external terminal (10, 12) is processed within the server unit (11) such that information transferred via packet switched communication (20) is converted into information to be transferred via circuit switched communication (21) and/or that information transferred via circuit switched communication (21) is converted into information to be transferred via packet switched communication (20).

9. The method according to claim 8, **characterised in that** the information transferred over the first communication link is transferred via a packet switched communication (20) comprising Push-to-Talk communication, in particular in form of a Push-to-Talk communication over Cellular, PoC or Voice over Internet Protocol, VoIP or Voice over LTE, VoLTE or Voice over LTE via Generic Access, VoLGA

10. The method according to claim 8 or 9, **characterised in that** the position of the first external terminal (10) is determined within the server unit (11).

11. The method according to anyone of claims 8 to 10, **characterised in that** information received and/or retrieved from the first and/or second external terminal (10, 12) is processed within the server unit (11) such that a Minimum Set of Data, MSD is generated or populated or formed during an eCall procedure.

## Patentansprüche

1. Servereinheit (11) zum Verarbeiten von eCall Informationen in Bezug auf ein erstes externes Terminal (10) und in Bezug auf ein zweites externes Terminal (12), wobei die Servereinheit (11) eine erste Schnittstelle (40), die für eine erste Kommunikation zwischen der Servereinheit (11) und dem ersten externen Terminal (10) verwendet wird, um eine erste Kommunikationsverbindung zu dem ersten externen Terminal (10) aufzubauen, und eine zweite Schnittstelle (41), die für eine zweite Kommunikation zwischen der Servereinheit (11) und dem zweiten externen Terminal (12) verwendet wird, um eine zweite Kommunikationsverbindung zu dem zweiten externen Terminal (10) aufzubauen, aufweist, wobei die zweite Kommunikationsverbindung eingerichtet ist, Informationen über eine leitungsvermittelte Kommunikation (21) zu übertragen, **dadurch gekennzeichnet, dass** die erste Kommunikationsverbindung eingerichtet ist, Informationen über eine packetvermittelte Kommunikation (22) zu übertragen, dass die Servereinheit (11) Mittel zum Verarbeiten von Informationen aufweist, die vom ersten und/oder zweiten externen Terminal (10, 12) empfangen und/oder abgerufen wurden, dass die Mittel zum Verarbeiten von Informationen eingerichtet sind, um über eine packetvermittelte Kommunikation (20) übertragene Informationen in Informationen umzuwandeln, die über eine leitungsvermittelte Kommunikation (21) übertragen werden sollen und/oder dass die Mittel zum Verarbeiten von Informationen eingerichtet sind, um über eine leitungsvermittelte Kommunikation (21) übertragene Informationen in Informationen umzuwandeln, die über eine packetvermittelte Kommunikation (22) übertragen werden sollen, und dass die Servereinheit (11) der Endpunkt der ersten Kommunikationsverbindung zwischen dem ersten externen Terminal (10) und der Servereinheit (11) ist und dass die Servereinheit (11) der Startpunkt der zweiten Kommunikationsverbindung zwischen der Servereinheit (11) und dem zweiten externen Terminal (12) ist.

2. Servereinheit (11) nach Anspruch 1, **dadurch gekennzeichnet, dass** die Servereinheit (11) einem Kommunikationsnetz, insbesondere einem Mobilfunknetz, zugeordnet ist.

3. Servereinheit (11) nach Anspruch 1 oder 2, **dadurch gekennzeichnet, dass** die erste Schnittstelle (40) eingerichtet ist, um Informationen von/zu dem ersten externen Terminal (10) zu empfangen und/oder zu senden, und dass die zweite Schnittstelle (41) eingerichtet ist, um Informationen zu/von dem zweiten externen Terminal (12) zu senden und/oder zu empfangen.

4. Servereinheit (11) nach einem der Ansprüche 1 bis 3, **dadurch gekennzeichnet, dass** die erste Kommunikationsverbindung eingerichtet ist, um Informationen über eine packetvermittelte Kommunikation (20) in Form einer Push-to-Talk Kommunikation zu übertragen, insbesondere in Form einer Push-to-Talk Kommunikation über Mobilfunk, PoC, oder Sprache über Internet Protokoll, VoIP, oder Sprache über LTE, VoLTE, oder Sprache über LTE mittels generischem Zugang, VoLGA.

5. Servereinheit (11) nach einem der Ansprüche 1 bis 4,**dadurch gekennzeichnet, dass** die Servereinheit (11) Mittel zum Bestimmen der Position des ersten externen Terminals aufweist.

6. Servereinheit (11) nach Anspruch 1, **dadurch gekennzeichnet, dass** die Mittel zum Verarbeiten von Informationen, welche vom ersten externen Terminal (10) empfangen und/oder abgerufen wurden, eingerichtet sind, um während einer eCall Prozedur einen Minimalsatz von Daten, MSD, zu erzeugen oder zu formen oder zu postulieren.

7. Kommunikationssystem zum Verarbeiten von eCall Informationen (1) in Bezug auf ein erstes externes Terminal (10) und in Bezug auf ein zweites externes Terminal (12), wobei das System eine Servereinheit (11) nach einem der Ansprüche 1 bis 6 aufweist, mindestens ein erstes externe Terminal (11), wobei das erste externe Terminal (11) eine Schnittstelle (40) aufweist, um eine erste Kommunikationsverbindung zu der Servereinheit (11) aufzubauen, wobei die erste Kommunikationsverbindung eingerichtet ist, um Informationen über eine packetvermittelte Kommunikation (20) zu übertragen, mindestens ein zweites externes Terminal (12, wobei das zweite externe Terminal (12) eine Schnittstelle (41) aufweist, um eine zweite Kommunikationsverbindung zu der Servereinheit (11) aufzubauen, wobei die zweite Kommunikationsverbindung eingerichtet ist, um Informationen über eine leitungsvermittelte Kommunikation (21) zu übertragen, wobei die Servereinheit (11) der Endpunkt der ersten Kommunikationsverbindung zwischen dem ersten externen Terminal (10) und der Servereinheit (11) ist, und wobei die Servereinheit (11) der Startpunkt der zweiten Kommunikationsverbindung zwischen der Servereinheit (11) und dem zweiten externen Terminal (12) ist.

8. Verfahren zum Verarbeiten von eCall Informationen in Bezug auf ein erstes externes Terminal (10) und in Bezug auf ein zweites externes Terminal (12) über eine Servereinheit (11), wobei die Servereinheit (11) eine erste Schnittstelle (40) zu dem ersten externen Terminal (40) und eine zweite Schnittstelle (41) zu dem zweiten externen Terminal (12) aufweist, wobei das Verfahren in einem Kommunikationssystem gemäß Anspruch 7 durchgeführt wird, **dadurch gekennzeichnet, dass** eine erste Kommunikationsverbindung zwischen dem ersten externen Terminal (10) und der Servereinheit (11) aufgebaut wird, dass Informationen über die erste Kommunikationsverbindung mittels einer packetvermittelten Kommunikation (20) übertragen werden, dass eine zweite Kommunikationsverbindung zwischen der Servereinheit (11) und dem zweiten externen Terminal (12) hergestellt wird, dass Informationen über die zweite Kommunikationsverbindung mittels einer leitungsvermittelten Kommunikation (20) übertragen werden, dass Informationen, die vom ersten und/oder zweiten externen Terminal (10, 12) empfangen und/oder abgerufen wurden, in der Servereinheit (11) derart verarbeitet werden, dass über eine packetvermittelte Kommunikation (20) übertragene Informationen in Informationen umgewandelt werden, die über eine leitungsvermittelte Kommunikation (21) übertragen werden sollen und/oder dass Informationen, die über eine leitungsvermittelte Kommunikation (21) übertragen wurden, in Informationen umgewandelt werden, die über eine packetvermittelte Kommunikation (20) übertragen werden sollen.

9. Verfahren nach Anspruch 8, **dadurch gekennzeichnet, dass** die Informationen, die über die erste Kommunikationsverbindung übertragen werden, über eine packetvermittelte Kommunikation (20) übertragen werden aufweisend eine Push-to-Talk Kommunikation, insbesondere in Form einer Push-to-Talk Kommunikation über Mobilfunk, PoC, oder Sprache über Internet Protokoll, VoIP, oder Sprache über LTE, VoLTE, oder Sprache über LTE mittels generischem Zugang, VoLGA.

10. Verfahren nach Anspruch 8 oder 9, **dadurch gekennzeichnet, dass** in der Servereinheit (11) die Position des ersten externen Terminals (10) bestimmt wird.

11. Verfahren nach einem der Ansprüche 8 bis 10, **dadurch gekennzeichnet, dass** Informationen, welche vom ersten und/oder zweiten externen Terminal (10, 12) empfangen und/oder abgerufen wurden, derart in der Servereinheit (11) verarbeitet werden, dass während einer eCall Prozedur ein Minimalsatz von Daten, MSD erzeugt oder geformt oder postuliert wird.

## Revendications

1. Unité formant serveur (11) destinée à traiter des informations d'appel d'urgence "eCall" associées à un premier terminal externe (10) et associées à un second terminal externe (12), ladite unité formant serveur (11) comprenant une première interface (40) qui est utilisée pour une première communication entre l'unité formant serveur (11) et le premier terminal externe (10) afin d'établir une première liaison de communication avec ledit premier terminal externe (10) et une seconde interface (41) qui est utilisée pour une seconde communication entre l'unité formant serveur (11) et le second terminal externe (12) afin d'établir une seconde liaison de communication avec ledit second terminal externe (12), ladite seconde liaison étant adaptée afin de transférer des informations par l'intermédiaire d'une communication par commutation par circuit (21),
**caractérisée en ce que** ladite première liaison est adaptée afin de transférer des informations par l'intermédiaire d'une communication par commutation de paquets (22), **en ce que** l'unité formant serveur (11) comprend des moyens de traitement d'informations reçues et/ou extraites des premier et/ou second terminaux externes (10, 12), **en ce que** les moyens de traitement d'informations sont adaptés afin de transformer des informations transférées par l'intermédiaire d'une communication par commutation de paquets (20) en informations à transférer par l'intermédiaire d'une communication par commutation par circuit (21) et/ou **en ce que** les moyens de traitement d'informations sont adaptés afin de transformer les informations transférées par l'intermédiaire d'une communication par commutation par circuit (21) en informations à transférer par l'intermédiaire d'une communication par commutation de paquets (22), et **en ce que** l'unité formant serveur (1) est le point final de la première liaison de commutation entre le premier terminal externe (10) et l'unité formant serveur (11) et **en ce que** l'unité formant serveur (11) est le point de départ de la seconde liaison de communication entre l'unité formant serveur (11) et le second terminal externe (12).

2. Unité formant serveur (11) selon la revendication 1, **caractérisée en ce que** ladite unité formant serveur (11) est affectée à un réseau de communication, en particulier à un réseau de communication radio mobile.

3. Unité formant serveur (11) selon la revendication 1 ou 2, **caractérisée en ce que** la première interface (40) est adaptée afin de recevoir des informations à partir du premier terminal externe (10) et/ou d'en envoyer vers celui-ci et **en ce que** la seconde interface (41) est adaptée afin d'envoyer des informations au second terminal externe (12) et/ou d'en recevoir de ce dernier.

4. Unité formant serveur (11) selon l'une quelconque des revendications 1 à 3, **caractérisée en ce que** la première liaison de communication est adaptée afin de transférer des informations par l'intermédiaire d'une communication par commutation de paquets (20) sous la forme d'une communication du type "Pousser pour Parler", en particulier sous la forme d'une communication du type "Pousser pour Parler sur téléphone cellulaire", PoC, ou "Voix sur protocole internet", Voip, ou "voix sur LTE", VoLTE, ou "voix sur LTE par accès générique", VoLGA.

5. Unité formant serveur (11) selon l'une quelconque des revendications 1 à 4, **caractérisée en ce que** l'unité formant serveur (11) comprend des moyens destinés à déterminer la position du premier terminal externe.

6. Unité formant serveur (11) selon la revendication 1, **caractérisée en ce que** les moyens de traitement d'informations reçues et/ou extraites à partir du premier terminal externe (10) sont adaptés afin de générer ou former ou collecter un jeu de données minimum MSD au cours d'une procédure d'appel "eCall".

7. Dispositif de communication destiné à traiter des informations d'appel "eCall" (1) associées à un premier terminal externe (10) et associées à un second terminal externe (12), ledit dispositif comprenant une unité formant serveur (11) selon l'une quelconque des revendications 1 à 6, au moins un premier terminal externe (10), ledit premier terminal externe (10) comprenant une interface (40) destinée à établir une première liaison de communication avec ladite unité formant serveur (11), la première liaison communication étant adaptée afin de transférer des informations par l'intermédiaire d'une communication par commutation de paquets (20), au moins un second terminal externe (12) ledit second terminal externe (12) comprenant une interface (41) destinée à établir une seconde liaison de communication avec ladite unité formant serveur (11), ladite seconde liaison de communication étant adaptée afin de transférer des informations par l'intermédiaire d'une communication par commutation par circuit (21), dans lequel l'unité formant serveur (1) est le point final de la première liaison de communication entre le premier terminal externe (10) et l'unité formant serveur (11) et dans lequel l'unité formant serveur (11) est le point de départ de la seconde liaison entre l'unité formant serveur (11) et le second terminal externe (12).

8. Procédé de traitement d'informations d'appel "eCall" associées à un premier terminal externe (10) et associées à un second terminal externe (12) par l'intermédiaire d'une unité formant serveur (11), ladite unité formant serveur (11) comprenant une première interface (40) avec ledit premier terminal externe (10) et une seconde interface (41) avec ledit second terminal externe (12), ledit procédé étant mis en oeuvre à l'intérieur d'un dispositif de communication selon la revendication 7, **caractérisé en ce qu'**une première liaison de communication est établie entre ledit premier terminal externe (10) et l'unité formant serveur (11), **en ce que** des informations sont transférées sur la première liaison de communication par l'intermédiaire d'une communication par commutation de paquets (20), **en ce qu'**une seconde liaison de communication est établie entre l'unité formant serveur (11) et le second terminal externe (12), **en ce que** des informations sont transférées sur la seconde liaison de communication par l'intermédiaire d'une communication par commutation par circuit (21), **en ce que** des informations reçues et/ou extraites à partir du premier et/ou second terminaux externes (10, 12) sont traitées à l'intérieur de l'unité formant serveur (11) de telle sorte que des informations transférées par communication par commutation de paquets (20) sont transformées en informations à transférer par communication par commutation par circuit (21) et/ou **en ce que** des informations transférées par communication par commutation par circuit (21) sont transformées en informations à transférer par communication par commutation de paquets (20).

9. Procédé selon la revendication 8, **caractérisé en ce que** les informations transférées sur la première liaison de communication sont transférées par l'intermédiaire d'une communication par commutation de paquets (20) comprend une communication du type "Pousser pour Parler", en particulier sous la forme d'une communication du type "Pousser pour Parler sur téléphone cellulaire", PoC, ou "Voix sur protocole internet", Voip, ou "voix sur LTE", VoLTE, ou "voix sur LTE par accès générique", VoLGA.

10. Procédé selon la revendication 8 ou 9, **caractérisé en ce que** la position du premier terminal externe (10) est déterminée à l'intérieur de l'unité formant serveur (11).

11. Procédé selon l'une quelconque des revendications 8 à 10, **caractérisé en ce que** les informations reçues et/ou émises par le premier et/ou second terminal externe (10, 12) sont traitées à l'intérieur de l'unité formant serveur (11) de telle sorte qu'un jeu de données minimum MSD est généré ou collecté ou formé au cours d'une procédure d'appel "eCall".
